# EUROPEAN PATENT APPLICATION

(11) **EP 4 538 660 A1**
(43) Date of publication of application: **16.04.2025**
(21) Application number: 23203606.1
(22) Date of filing: 13.10.2023
(51) Int. Cl.: G01K 1/14, G01K 7/02, H01R 4/2416

(54) **TEMPERATURE SENSOR**

(71) Applicant: Hidria d.o.o., 5220 Tolmin (SI)
(72) Inventor: Lipuscek, Ana, Kal nad Kanalom (SI); Bric, Urban, Breginj (SI); Kenda, Miha, Bovec (SI); Hrast, Mitja, Tolmin (SI)
(74) Representative: Herrmann, Jochen

(57) **Abstract**

The invention relates to a Temperature sensor having a housing (10) in which a printed circuit board (30) is at least partially accommodated, the temperature sensor having a thermocouple (20) which has a first and a second measuring cable (21, 22), the measuring cables (21, 22) are electrically conductively connected to one another at a first contact point at a first end and are contacted in the region of a line section, preferably in the region of their second end, at a second contact point in each case by means of a contact element (40) with an electrical circuit, preferably an ASIC (31), of the printed circuit board (30). In order to reduce the assembly effort the invention suggest that at least one of the contact elements (40) has a measuring cable contact section (46) on which at least one cutting element (47.3) is arranged, which is provided and arranged in order to cut through an insulation (23) enclosing an electrical conductor (24) of the measuring cable (21, 22), and in that the cutting element (47.3) and/or a contact section (48.1, 48.2) adjoining the cutting element (47.3) establishes an electrical connection with the electrical conductor (24).

## Description

The invention relates to a temperature sensor having a housing in which a printed circuit board is at least partially accommodated, the temperature sensor having a thermocouple which has a first and a second measuring cable, the measuring cables are electrically conductively connected to one another at a first contact point at a first end and are contacted in the region of a line section, preferably in the region of their second end, at a second contact point in each case by means of a contact element with an electrical circuit, preferably an ASIC, of the printed circuit board.

The use of a thermocouple for temperature measurement in a car is well known. Temperature sensors with one or more thermocouples are characterized by the ability to detect a wide temperature range of -50°C to 1000°C.The so-called thermoelectric effect is used here: If two electrically conductive measuring wires made of different metallic materials are connected to one another and if this connection point and the free ends of the measuring wires are exposed to different temperatures, a thermal voltage is generated between the free ends, the strength of which is directly proportional to the temperature difference between the measuring point and a reference temperature at a reference point or junction at the free ends of the measuring wires. If the temperature at the reference junction and the characteristic thermally induced electrical voltage of the different measuring wires are known, the temperature at the junction can be determined.

Compared to other temperature sensors, thermocouples offer the advantage that they can be made comparatively small and compact and the thermoelectric voltage can be transmitted over a greater distance. They are therefore able to measure the temperature even in places that are difficult to access, for example in the exhaust system of a motor vehicle or in a cooling water or oil circuit of the vehicle.

A temperature sensor for a motor vehicle engine with a thermocouple, a printed circuit board and an integrated circuit is known from WO 2017/068 307 A1. The temperature sensor comprises a protective housing made of a polymer material, in which the circuit board is arranged. The free ends of the thermocouple are connected to terminals on the circuit board by means of connecting means which are made of the same material as the respective measuring wire of the thermocouple.

A temperature sensor for a motor vehicle is known from WO 2018 / 002 547 A1 . The temperature sensor has a thermocouple, which is connected to metallic transmission elements in a first housing. The temperature sensor also has a second housing in which a printed circuit board with an evaluation circuit is arranged, the second housing encasing the first housing. The metallic transmission elements connect the free ends of the thermocouple with the printed circuit board. Each connection point is surrounded by a sealing element. The first housing supports the junction between the free ends of the thermocouple and the metallic transmission bodies.

US 7,722,362 B2 discloses a temperature sensor with a thermocouple and an evaluation circuit as well as a manufacturing method for such a temperature sensor. The temperature sensor comprises a printed circuit board, a housing, a thermocouple and a connecting element. The circuit board includes an electrical circuit configured to receive a sensor signal and to generate a sensor characteristic in response to the received sensor signal. The housing includes a body and a cavity defined by inner surfaces of the body and configured to receive the circuit board, the circuit board being positioned in the cavity. The input line is configured to receive the signal from a sensor and can be formed with an insulated solid or stranded conductor. The connecting element comprises a unitary body with a first end, which is crimped to one end of the measuring wire of the thermocouple, and with a second end, which is positioned in the cavity and is attached directly to the printed circuit board.

Further temperature sensors comprising thermocouples which are connected to the printed circuit board by means of a crimped connection are known from EP 3 872 465 A1 and WO 2020193597. JP 2002206970 A uses srews to connect the cables of the thermocouple to the printed circuit board.

The disadvantage of the known solutions, however, is that they are complex to manufacture and therefore comparatively expensive. Furthermore, the distance between the free ends of the thermocouple, at which the thermoelectric voltage of the thermocouple is detected, and a reference temperature sensor on the circuit board causes a measurement error, because the temperature at the free ends of the thermocouple differs from the temperature on the circuit board.

It is the object of the invention to provide a temperature sensor which is easy to manufacture and wherein the cables of the thermocouple can be reliably fixed to the printed circuit board even in applications where high reliability at high vibrations is required.

This object is solved in that at least one of the contact elements has a measuring cable contact section on which at least one cutting element is arranged, which is provided and arranged in order to cut through an insulation enclosing an electrical conductor of the measuring cable, and in that the cutting element and/or a contact section (adjoining the cutting element establishes an electrical connection with the electrical conductor.

The use of a contact element with at least one cutting element makes it possible to create a contact connection between the printed circuit board and the measuring cable in a simple manner. For this purpose, the contact element only has to be inserted into the housing in an assembly movement. The at least one cutting element cuts through the insulation of the measuring wire and simultaneously contacts the electrical conductor (e.g. a stranded wire or a wire) of the measuring cable. At the same time, the contact element is preferably already in its final assembly position. Surprisingly, it has been shown that for accurate temperature measurement, contact resistance is not critical and thus the electrical contact according to the invention shows good performance even when the temperature sensor is used in hostile conditions and under vibration.

According to a preferred embodiment of the invention it can be provided, that the contact element has a contact projection which is held in a contact receptacle of the printed circuit board by means of a press fit connection. This further simplifies assembly, as the printed circuit board can be mounted on the contact projection in a simple placement movement and reliably contacted at the same time. This means that no further elements, such as a screw connection, a crimp connection or a soldered or welded connection, are required to create the contact connection.

In a further improved embodiment of the invention, it is provided that the housing has a contact element receptacle which forms a plug-in receptacle, the contact element being insertable into the plug-in receptacle in a joining movement, preferably in a linear joining movement, and in that the at least one cutting element cuts through the insulation of the measuring cable during this first joining movement. This allows easy assembly of the temperature sensor. The plug-in receptacle guides the contact element during the assembly movement, so that the cutting movement is also guided in a reproducible manner. In this way, the electrical contact can be made reliably in a simple manner, even in an automated assembly process.

In a further improved embodiment of the invention, it is provided that the plug-in receptacle has a stop which limits the joining movement of the contact element into the plug-in receptacle and against which the contact element rests with a supporting section in the assembly position and/or in that the contact element is held in the plug-in receptacle in a frictionally engaged manner in the assembly position. The stop connection prevents impermissible crushing or damage to the electrical conductor. The frictional connection holds the contact element securely in the plug -in receptacle. Preferably it is provided, that the plug-in receptacle is formed by the material of the housing formed in one piece from plastic.

In a preferred embodiment of the invention, it can be provided that the contact element has two cutting elements which delimit a cutting gap formed between the cutting elements and the cutting gap tapering at least in regions, preferably continuously, starting from an insertion extension. The electric conductor can be contacted on two, preferably opposite, sides to ensure a good electrical connection. By means of the tapering cutting gap the measuring cable is securely guided into the cutting gap and the cutting movement of the cutting elements is advantageously more or less tangential to the insulation of the of the measuring cable.

To improve the contact connection between the contact element and the conductor of the measuring cable, it can be provided that that the cutting element of the contact element is carried by a clamping section, preferably formed by the latter, or in that the cutting elements of the contact element are each carried by a clamping section, preferably formed by the latter, in that the clamping section(s) is/are arranged on the contact element in a resiliently deflectable manner in order to generate a prestress between the cutting element and the electrical conductor of the measuring cable.

A reliable electrical contact and at the same time a secure mechanical connection between the contact element and the printed circuit board can be achieved in that the contact projection of the contact element has two spring legs which can be deflected resiliently with respect to one another and are clamped resiliently in a through-passage of the printed circuit board, it preferably being provided that the spring legs are connected to one another at their free ends, forming an end section which tapers towards the free end of the spring legs. The tapering free end allows easy insertion of the contact projection into the through-passage, e.g. a bore, in the printed circuit board.

According to a further embodiment of the invention it can be provided, that the housing has a cable passage through which the measuring cables are guided into the housing, in that the contact element or the contact elements are arranged in the housing at a distance from the cable passage, and in that a strain relief acts on at least one of the measuring cables in the distance region between the cable passage and the contact element. By means of the strain relief, the contact element can be freed from mechanical stress or this stress can be reduced, so that the contact connection between the measuring cable and the printed circuit board is not impaired.

Here, a simple constructive design of the strain relief is achieved if it is provided that the strain relief has two clamping sections arranged at least spaced apart from one another in regions, in that a clamping receptacle which tapers, preferably continuously, is formed between the two clamping sections and in which the associated measuring cable is held clamped.

With such a design, the measuring cable is pulled further into the tapered clamping receptacle with increasing tensile stress, which enables reliable protection of the contact element, even under heavy tensile loads acting on the measuring cable. In addition, the measuring cable can also be easily mounted in the strain relief. To do this, it simply has to be inserted into the tapered clamping receptacle and, if necessary, pressed into it with a certain pretensioning force.

For this purpose, it may in particular be provided, die that the clamping sections each have a first surface section, the first surface sections being set in a V-shape with respect to one another, and in that the surface sections run in the direction of the longitudinal extent of the associated measuring wire or essentially in the direction of the longitudinal extent of the associated measuring wire.

To further improve the pull-out strength of the strain relief, it may be provided, that at least one projection is arranged in the region of the strain relief and between the clamping sections, around which projection the associated measuring wire is deflected.

If it is provided according to an embodiment of the invention, that in the region between the strain relief and the cable passage an insertion widening is provided, in which the associated measuring wire is received and which widens from the strain relief towards the cable passage, then the cable can be easily mounted. For this purpose, it is inserted through the cable passage of the housing and pulled into the strain relief via the insertion widening until the cable is in the desired position. The contact element can then be mounted. In such a design it may be provided, that the insertion widening has two inclined surfaces set at an angle to one another, which converge in the direction from the cable passage towards the strain relief.

Advantageously it may be provided that the at least one contact element consists of one of the following materials: CuNiSi-, or CuSn6-material,
Advantageously, the material of the contact element is identical or at least similar to the material of the electrical conductors of the associated measuring cable. This prevents loss of the contact connection even in the event of strong vibrations acting on the temperature sensor.

For example, a CuNiSi- or CuSn6-material or a similar material can be used as the material for the contact element for an N-type conductor of the measuring cable.

According to a preferred embodiment of the invention it may be provided, that a reference temperature measuring element with an associated ASIC (Application-Specific Integrated Circuit) is arranged on the printed circuit board, in that a metallic, thermally conductive layer, preferably a copper layer, is arranged on the printed circuit board in the region between the reference temperature measuring element and the second contact point of the at least one measuring cable. The improved thermal conduction in this area means that the temperature at the reference temperature measuring element is almost the same as that at the contact point between the contact element and the printed circuit board. This improves the measurement result for the temperature to be measured at the first contact point (hot junction).

The invention is explained in more detail below with reference to an example of an embodiment shown in the drawings. It shows:
Figure 1 a perspective view of a temperature sensor,
Figure 2 the representation according to Figure 1 in top view,
Figure 3 the representation according to Figure 2 in a partial assembly representation,
Figure 4 a perspective sectional view along the sectional course marked IV-IV in Figure 3,
Figure 5 a perspective sectional view along the sectional course marked V-V in Figure 3,
Figure 6 a perspective sectional view along the sectional course marked VI-VI in Figure 3,
Figure 7 the sectional view according to Figure 6 in a modified perspective and
Figure 8 a contact element in front view.

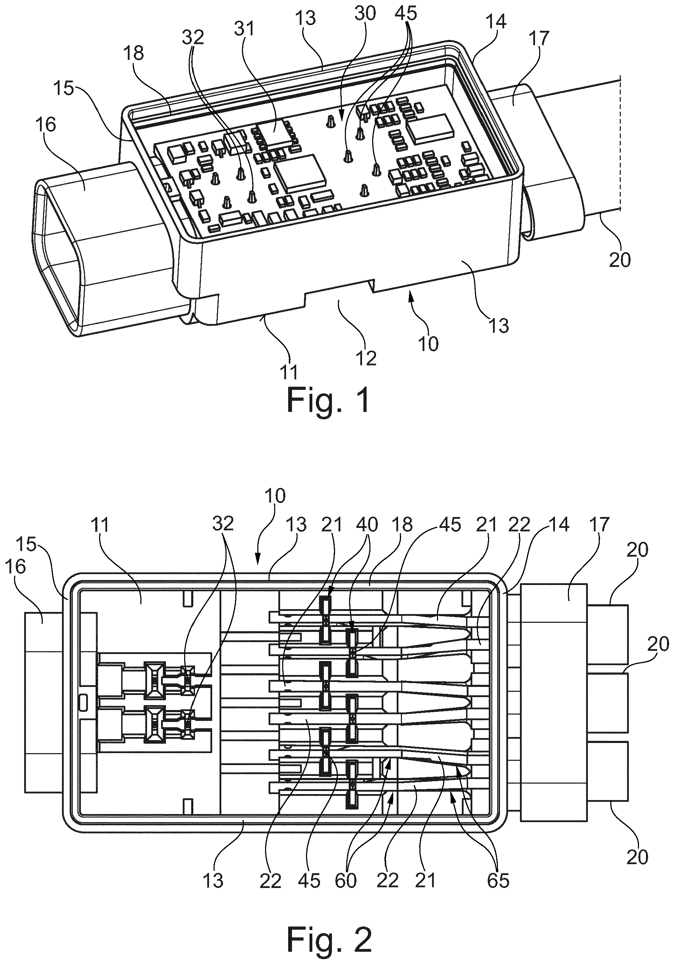

As shown in Figure 1, the temperature sensor according to the invention has a housing 10. This housing 10 can be constructed in such a way that it has a housing bottom 11 from which integrally formed side walls 13 rise on opposite sides. It may be the case that the side walls 13 are interconnected by an integrally formed rear wall 14 and an integrally formed front wall 15.

The side walls 13, rear wall 14 and front wall 15 may form a cavity, for receiving a printed circuit board 30.

It may be the case that a cable passage 17 is provided in the region of one side of the housing 10, for example in the region of the rear wall 14. This cable passage 17 is used for inserting the ends of measuring cables 21, 22 of a thermocouple 20 (see Figure 2).

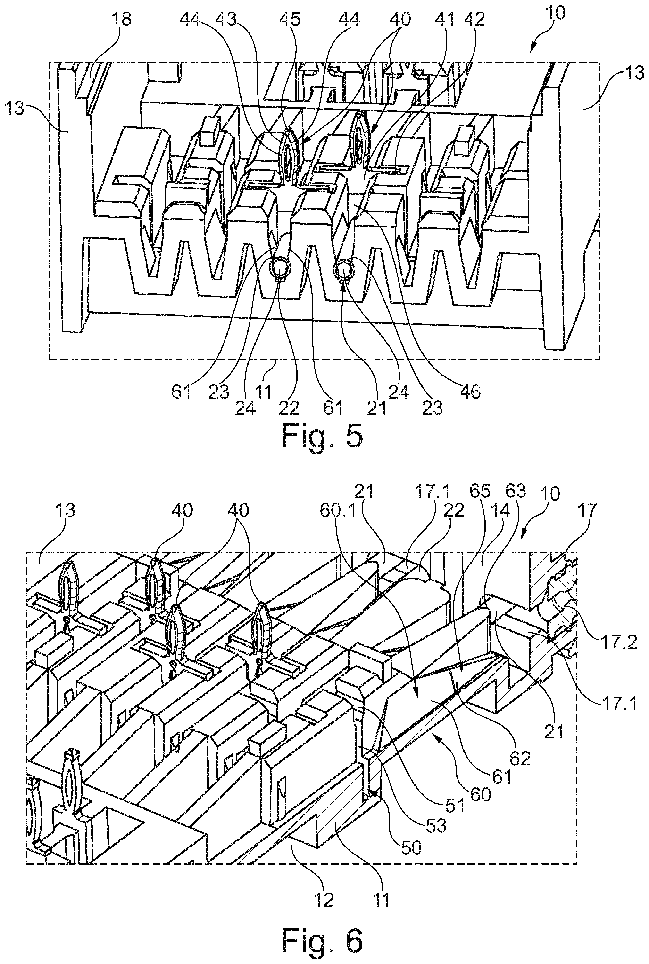

As Figure 6 shows, it can be the case that at least for one or more measuring cables 21, 22 a cutout 17.1 is provided in the side wall 13 or rear wall 14 of the housing 10, through which the at least one measuring cable 21, 22 is led. On the outside of this side wall 13 or rear wall 14 a projection is formed, which forms part of the cable passage 17. A sealing 17.2 is accommodated in this part of the component in order to seal the insertion area of the cable passage 17. The sealing 17.2 wraps sealingly around the outer periphery of the measuring cables 21, 22.

Figure 1 further illustrates that a connection area 16 can be provided on the housing 10, preferably on the front wall 15 opposite the rear wall 14. In this connection area 16, a contact element, for example a plug, can be accommodated in order to electrically connect the temperature sensor to a further circuit (not shown). The connection area 16 has contact elements which are connected to the printed circuit board 30 via measuring element terminal contacts 32.

Figure 1 shows that the printed circuit board 30 is inserted into the cavity of the housing 10. The printed circuit board 30 has an electrical circuit. Further, the printed circuit board 30 may have an ASIC 31 associated with a reference temperature measuring element (not shown) in the region of or on the printed circuit board 30. The reference temperature measuring element measures the temperature within the cavity of the housing 10, and the measured temperature is used as an variable to determine the temperature measured by the thermocouple 20.

In a known manner, the thermocouple 20 has two measuring cables 21, 22. These two measuring cables 21, 22 are electrically connected to each other at their first ends to form a first contact point (not shown). The opposite end of the measuring cables 21, 22 is shown in Figure 2. As this illustration shows, the measuring cables 21, 22 of three thermocouples 20 are inserted endwise into the housing 10 to be electrically conductively connected to the printed circuit board 30.

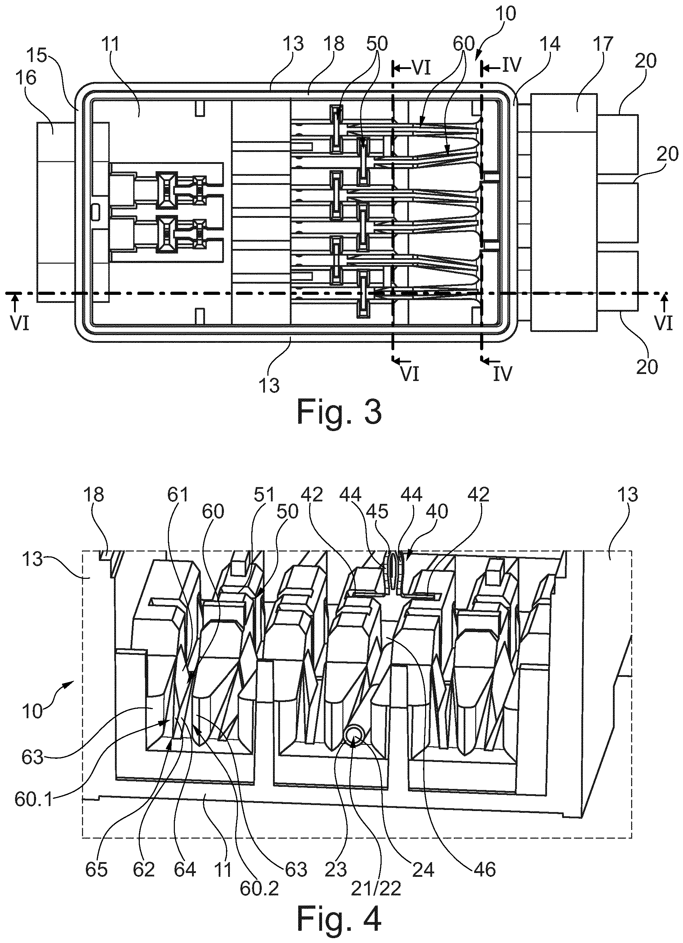

Figure 4 illustrates that at least one of the measuring cables 21,22 has an electrical conductor 24 surrounded circumferentially by an insulation 23. The electrical conductor 24 may be a wire or a stranded wire.

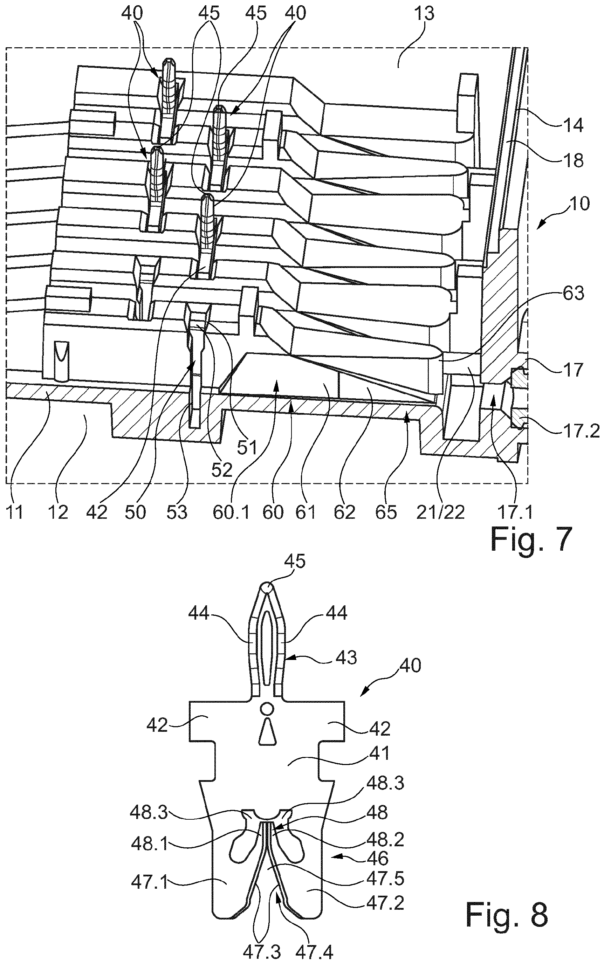

For contacting at least one of the measuring cables 21,22 with the printed circuit board 30, a contact element 40 is used, as exemplarily shown in Figure 8.

As this embodiment illustrates, it is conceivable that the contact element 40 comprises a base part 41 carrying supporting sections 42 on opposite sides.

It is conceivable that the contact element 40, preferably integrally formed on the base part 41, carries a contact projection 43. It may be the case that the contact projection 43 has at least two spring legs 44 which can be deflected resiliently with respect to one another.

Further, it may be the case that the spring legs 44 are integrally connected to one another at their free ends to form an end section 45. The end section 45 may be, for example, configured to taper toward the free end of the contact projection 43. Further, it may be the case that the contact projection 43 also tapers from a central portion towards the base part 41, as shown in Figure 8.

According to a possible variant, it may be the case, as Figure 8 shows, that the contact element 40 has at least one, preferably two, cutting elements 47.3. The cutting elements 47.3 can be blade-shaped. Preferably, the cutting elements 47.3 are each integrally formed on a tensioning section 47.1, 47.2.

The tensioning sections 47.1, 47.2 are preferably part of a measuring cable contact section 46.

As Figure 8 shows, the two cutting elements 47.3 may be spaced apart to form a cutting gap 47.5 between them.

The cutting gap 47.5 may be such that, starting from an end insertion extension 47.4, it tapers continuously in the direction towards the base part 41 or in the direction towards the contact projection 43.

Advantageously, it may be the case that the cutting elements 47.3 form a receiving section 48 in the region of the tapered end of the cutting gap 47.5 or are connected to such a receiving section 48. The receiving section 48 has contact sections 48.1, 48.2 opposite each other.

It may be the case that the contact sections 48.1, 48.2 are resiliently deflectable relative to one another to form a spacing region therebetween. To allow deformation of the contact sections 48.1, 48.2 or the tensioning sections 47.1, 47.2, it may be the case that the contact element 40 has clearings 48.3 into which the contact sections 48.1, 48.2 can be deflected. Furthermore, it may be the case that the clearings 48.3 weaken the cross-section of the contact element 40 in the region of the tensioning sections 47.1, 47.2 in order to permit a spring-elastic deformation of the tensioning sections 47.1, 47.2.

Figure 3 illustrates that contact element receptacles 50 are provided in the housing 10. These have a plug-in receptacle 53, as illustrated in Figure 6. It may be that the plug-in receptacle 53 has insertion slopes 51 at its free end to facilitate insertion of a contact element 40 into the contact element receptacle 50. Figure 7 further illustrates that stops 52 may be provided laterally adjacent to the contact element receptacle 50.

As shown in Figure 7, strain reliefs 60 are arranged in the area between the contact element receptacles 50 and the cable passage 17. These strain reliefs 60 have a groove tapering towards the groove bottom 64 and thus towards the bottom 11 of the housing 10. A respective measuring cable 21, 22 can be inserted into this tapering groove.

To form the tapered groove, it may be the case, for example, that the strain relief 60 has two mutually opposite clamping sections 60.1, 60.2 which are formed by surface sections 61 and which are set in a V-shape with respect to one another. The surface sections 61 extend in the direction of the longitudinal extension of the associated groove.

It may be the case that the strain relief 60 additionally forms or comprises an insertion extension 65 in the direction towards the cable passage 17.

It may be the case that the insertion extension 65 has two inclined surfaces 62 extending from the clamping sections 60.1, 60.2 in the direction towards the cable passage 60 along the groove. Thereby, the distance between the inclined surfaces 22 continuously increases to form the insertion extension 65.

Figures 4 and 7 illustrate that rounded deflection sections 63 may be provided in the region between the insertion extensions 65 and the associated cable feedthroughs 17 to direct the measuring cables 21, 22 into their respective grooves.

For insertion and mounting of the measuring cables 21, 22, they are inserted into the housing 10 through the cable passage 17. In doing so, each measuring cable 21, 22 is inserted into its assigned groove in the housing 10, as illustrated in Figure 2.

The insertion of the measuring cables 21, 22 is comparatively simple, since they can be drawn into the grooves with little force via the insertion extensions 65. Then the measuring cables 21, 22 can be pressed into the strain relief 60 between the associated clamping sections 60.1, 60.2. The ends of the measuring cables 21, 22 project beyond the plug-in receptacles 53 of the contact element receptacles 50, as shown in Figure 2.

Once the measuring cables 21, 22 have been inserted into the housing 10, the contact elements 40 can be mounted. For this purpose, the contact elements 40 are each inserted into the plug-in receptacles 53. As a result of this assembly movement, the associated measuring cable 21, 22 enters the insertion extension 47.4 of the contact element 40 and encounters the mutually opposite cutting elements 47.3. The cutting elements 47.3 cut through the insulation 23 of the measuring cable 21, 22, so that an electrically conductive connection is established between the cutting elements 47.3 and the electrical conductor 24.

As a result of the assembly movements, the measuring cable 21, 22 enters the area of the contact sections 48.1, 48.2 and is held clamped between them. The insertion movement of the contact elements 40 into the plug-in receptacle 53 is limited by the supporting sections 42, which come into contact with the stops 52. Preferably, the plug-in receptacle 53 is dimensionally designed such that the contact element 40 is held clamped therein.

Subsequently, the printed circuit board 30 can be inserted into the housing 10. The contact elements 40 are inserted with their contact projections 43 through cutouts in the printed circuit board 30. During this joining movement, the spring legs 44 are elastically deflected against each other. The spring legs 44 then brace in the cutout and simultaneously establish electrical contact with an electrical circuit mounted on the printed circuit board 30.

Finally, the housing 10 can be sealed tightly at the top with a cover. For this purpose, the housing 10 has a circumferential sealing section 18.

## Claims

1. Temperature sensor having a housing (10) in which a printed circuit board (30) is at least partially accommodated, the temperature sensor having a thermocouple (20) which has a first and a second measuring cable (21, 22), the measuring cables (21, 22) are electrically conductively connected to one another at a first contact point at a first end and are contacted in the region of a line section, preferably in the region of their second end, at a second contact point in each case by means of a contact element (40) with an electrical circuit, preferably an ASIC (31), of the printed circuit board (30),
**characterized in that**
at least one of the contact elements (40) has a measuring cable contact section (46) on which at least one cutting element (47.3) is arranged, which is provided and arranged in order to cut through an insulation (23) enclosing an electrical conductor (24) of the measuring cable (21, 22), and **in that** the cutting element (47.3) and/or a contact section (48.1, 48.2) adjoining the cutting element (47.3) establishes an electrical connection with the electrical conductor (24).

2. Temperature sensor according to claim 1, **characterized in that** the contact element (40) has a contact projection (43) which is held in a contact receptacle of the printed circuit board (30) by means of a press fit connection.

3. Temperature sensor according to one of claims 1 or 2, **characterized in that** the housing (10) has a contact element receptacle (50) which forms a plug-in receptacle (53), the contact element (40) being insertable into the plug-in receptacle (53) in a joining movement, preferably in a linear joining movement, and **in that** the at least one cutting element (47.3) cuts through the insulation (23) of the measuring cable (21, 22) during this first joining movement.

4. Temperature sensor according to claim 3, **characterized in that** the plug-in receptacle (53) has a stop (52) which limits the joining movement of the contact element (40) into the plug-in receptacle (53) and against which the contact element (40) rests with a supporting section (42) in the assembly position and/or **in that** the contact element (40) is held in the plug-in receptacle (53) in a frictionally engaged manner in the assembly position.

5. Temperature sensor according to one of claims 1 to 4, **characterized in that** the contact element (40) has two cutting elements (47.3) which delimit a cutting gap (47.5) formed between the cutting elements (47.3), and **in that** the cutting gap (47.5) tapering at least in regions, preferably continuously, starting from an insertion extension (47.4).

6. Temperature sensor according to one of claims 1 to 5, **characterized in that** the cutting element (47.3) of the contact element (40) is carried by a clamping section (47.1, 47.2), preferably formed by the latter, or **in that** the cutting elements (47.3) of the contact element (40) are each carried by a clamping section (47. 1, 47.2), preferably formed by the latter, **in that** the clamping section(s) (47.1, 47.2) is/are arranged on the contact element (40) in a resiliently deflectable manner in order to generate a prestress between the cutting element (47.3) and the electrical conductor (34) of the measuring cable (21, 22).

7. Temperature sensor according to one of claims 1 to 6, **characterized in that** the contact projection (43) of the contact element (40) has two spring legs (44) which can be deflected resiliently with respect to one another and are clamped resiliently in a through-passage of the printed circuit board (30), it preferably being provided that the spring legs (44) are connected to one another at their free ends, forming an end section (45) which tapers towards the free end of the spring legs (44).

8. Temperature sensor according to one of claims 1 to 7, **characterized in that** the housing (10) has a cable passage (17) through which the measuring cables (21, 22) are guided into the housing (10), **in that** the contact element or the contact elements (40) are arranged in the housing (10) at a distance from the cable passage (17), and **in that** a strain relief (60) acts on at least one of the measuring cables (21, 22) in the distance region between the cable passage (17) and the contact element (40).

9. Temperature sensor according to claim 8, **characterized in that** the strain relief (60) has two clamping sections (60.1, 60.2) arranged at least spaced apart from one another in regions, **in that** a clamping receptacle which tapers, preferably continuously, is formed between the two clamping sections (60.1, 60.2) and in which the associated measuring cable (21.1, 21.2) is held clamped.

10. Temperature sensor according to claim 9, **characterized in that** the clamping sections (60.1, 60.2) each have a first surface section (61), the first surface sections (61) being set in a V-shape with respect to one another, and **in that** the surface sections (60.1, 60.2) run in the direction of the longitudinal extent of the associated measuring wire (21, 22) or essentially in the direction of the longitudinal extent of the associated measuring wire (21, 22).

11. Temperature sensor according to one of claims 9 or10, **characterized in that** a projection is arranged in the region of the strain relief (60) and between the clamping sections (60.1, 60.2), around which projection the associated measuring wire (21, 22) is deflected.

12. Temperature sensor according to one of the claims 8 to 11, **characterized in that** in the region between the strain relief (60) and the cable passage (17) an insertion widening (65) is provided, in which the associated measuring wire (21, 22) is received and which widens from the strain relief (60) towards the cable passage (17).

13. Temperature sensor according to claim 12, **characterized in that** the insertion widening (65) has two inclined surfaces (62) set at an angle to one another, which converge in the direction from the cable passage (17) towards the strain relief (60).

14. Temperature sensor according to one of claims 1 to 13, **characterized in that** the at least one contact element (40) consists of one of the following materials: CuNiSi- or CuSn6-material, please add.

15. Temperature sensor according to one of claims 1 to 14, **characterized in that** a reference temperature measuring element with an associated ASIC (31) (Application-Specific Integrated Circuit) is arranged on the printed circuit board (30), **in that** a metallic, thermally conductive layer, preferably a copper layer, is arranged on the printed circuit board (30) in the region between the reference temperature measuring element and the second contact point of the at least one measuring cable (21, 22).
